# EUROPEAN PATENT APPLICATION

(11) **EP 4 578 844 A1**
(43) Date of publication of application: **02.07.2025**
(21) Application number: 23916282.9
(22) Date of filing: 26.12.2023
(51) Int. Cl.: C04B 35/043

(54) **PRODUCTION METHOD FOR MAGNESIA-CARBON BRICK**

(30) Priority: 11.01.2023 JP 2023002644
(71) Applicant: Krosakiharima Corporation, Kitakyushu-shi, Fukuoka 806-8586 (JP)
(72) Inventor: SHIOHAMA, Michiharu, Kitakyushu-shi, Fukuoka 806-8586 (JP)
(74) Representative: Vossius & Partner Patentanwälte Rechtsanwälte mbB
(86) International application number: PCT/JP2023/046596
(87) International publication number: WO 2024/150669

(57) **Abstract**

The present invention provides a magnesia-carbon brick having excellent spalling resistance even though it contains graphite at a low rate, and having excellent corrosion resistance. In the present invention, the magnesia-carbon brick production method comprises: adding, as a binder, pitch/tar which is pitch, diluted pitch obtained by diluting pitch with a solvent, tar, or diluted tar obtained by diluting tar with a solvent, to a refractory raw material blend containing magnesia at a rate of 85% by mass or more, and containing graphite at a rate of 12% by mass or less (including 0); and subjecting the resulting mixture to kneading under a warm condition and then to molding under a warm condition, wherein the particle size composition of the magnesia in the refractory raw material blend is set such that the mass ratio of magnesia having a particle size of 1 mm or more to magnesia having a particle size of 0.075 mm to less than 1 mm is 0.2 to 1.5, and the mass ratio of the magnesia having a particle size of 1 mm or more to magnesia having a particle size of less than 0.075 mm is 3.0 or more.

## Description

### TECHNICAL FIELD

The present invention relates to a method of producing a magnesia-carbon brick used for molten metal containers, particularly, such as a converter, an electric furnace, a ladle, and a secondary refining furnace.

### BACKGROUND ART

A magnesia-carbon brick is excellent in corrosion resistance and spalling resistance, and is widely used for molten metal containers. However, since it contains graphite such as flake graphite in a large amount as a carbon source, there is a problem of heat loss due to dissipation of heat of molten metal caused by its high thermal conductivity, and other problems such as carbon pickup, and increase in CO₂ emissions due to its oxidation. For this reason, in recent years, magnesia-carbon bricks containing no graphite or containing graphite at a very low rate have been developed (Patent Document 1 and Patent Document 2). These have achieved good results in secondary refining furnaces or the like, but in converters and electric furnaces having high demand for magnesia-carbon bricks, it is mainstream for magnesia-carbon bricks to still contain graphite at a rate of around 15% by mass due to a problem with spalling resistance. The reason for this is that since converters and electric furnaces are overwhelmingly high in terms of the number of uses, as compared with secondary refining furnaces, and thus the occurrence of flaking, dropout or the like due to cracking of brick caused by spalling exerts a large influence on the usable life of converter furnaces and electric furnaces, the requirement level for spalling resistance of bricks is extremely high.

Further, since magnesia-carbon bricks for converters and electric furnaces contain flake graphite at a rate of around 15% by mass, as mentioned above, it is considered that the flake graphite disappears through a reaction with iron oxide in slag, and the resulting formed pores are infiltrated by slag components, and dissolution of refractory aggregate is accelerated, which becomes a factor for wear damage to the bricks.

Meanwhile, with regard to a production method for a magnesia-carbon brick, in Japan, there was a period when pitch or tar was used as a binder, but, in recent years, a phenol resin has been generally used, as used in Patent Document 1 and Patent Document 2. Since pitch is a solid matter at room temperature, and the tar is also a viscous liquid at room temperature, it is necessary to take a time and effort for heating a mixture to a temperature at which pitch or tar has a viscosity suitable for molding, and kneading and molding the mixture. In contrast, since a phenol resin can be dissolved in a solvent to have good wettability with refractory aggregate and exhibit an adherence property, a mixture can be kneaded and molded even at normal temperature. However, when a phenol resin is used as binder, the above-mentioned spalling resistance cannot be said to be sufficient.

On the other hand, as an example in which pitch is used as a binder, Patent Document 3 discloses a method comprising: kneading refractory aggregate with 0.5-15% by weight of mesophase pitch powder which contains 60% or more of bulk mesophase pitches having optical anisotropy and has a carbonization yield of 70% or more, in a temperature region where the mesophase pitch powder is softened, and then subjecting the resulting mixture to molding and appropriately to firing. In Inventive Examples of Table 2, a magnesia-carbon brick containing graphite at a rate of 17% by mass is disclosed. However, this magnesia-carbon brick involves the aforementioned problems due to a high graphite content rate.

Further, Patent Document 4 discloses a technique of producing a magnesia-carbon brick containing graphite at a rate of about 10% by mas, wherein the technique comprises kneading refractory granulations with a binder obtained by dissolving coal-tar pitch in an anthracene oil without heating. However, this magnesia-carbon brick involves a problem that corrosion resistance is insufficient.

### PRIOR ART DOCUMENTS

### [Patent Document]

Patent Document 1: JP 2018-070406 A
Patent Document 2: JP 2020-100511 A
Patent Document 3: JP H05-270889 A
Patent Document 4: JP 5536299 B

### SUMMARY OF INVENTION

### [Technical Problem]

The technical problem to be solved by the present invention is to provide a magnesia-carbon brick having excellent spalling resistance even though it contains graphite at a low rate, and having excellent corrosion resistance.

### [Solution to Technical Problem]

With regard to a method of producing a magnesia-carbon brick, wherein the method comprises: adding pitch/tar as a binder to a refractory raw material blend consisting mainly of magnesia; and subjecting the resulting mixture to kneading and molding under a warm condition, through various studies about the particle size composition of magnesia in the refractory raw material blend, the present inventor has found out a production method for a magnesia-carbon brick capable of suppressing deterioration in spalling resistance even if the amount of graphite is reduced, and achieving excellent corrosion resistance.

Specifically, according to one aspect of the present invention, the following a magnesia-carbon brick production method is provided.

A method of producing a magnesia-carbon brick, the method comprising: adding, as a binder, pitch/tar which is pitch, diluted pitch obtained by diluting pitch with a solvent, tar, or diluted tar obtained by diluting tar with a solvent, to a refractory raw material blend containing magnesia at a rate of 85% by mass or more, and containing graphite at a rate of 12% by mass or less (including 0); and subjecting the resulting mixture to kneading under a warm condition and then to molding under a warm condition, wherein: a particle size composition of the magnesia in the refractory raw material blend is set such that a mass ratio of magnesia having a particle size of 1 mm or more to magnesia having a particle size of 0.075 mm to less than 1 mm is 0.2 to 1.5, and a mass ratio of the magnesia having a particle size of 1 mm or more to magnesia having a particle size of less than 0.075 mm is 3.0 or more; and an addition rate of the pitch/tar is 1% by mass to 8% by mass with respect to 100% by mass of the refractory raw material blend.

According to another aspect of the present invention, the following a magnesia-carbon brick production method is provided.

A method of producing a magnesia-carbon brick, the method comprising: adding, as a binder, pitch/tar which is pitch, diluted pitch obtained by diluting pitch with a solvent, tar, or diluted tar obtained by diluting tar with a solvent, to a refractory raw material blend containing magnesia at a rate of 85% by mass or more, and containing graphite at a rate of 12% by mass or less (including 0); and subjecting the resulting mixture to kneading under a warm condition and then to molding under a warm condition, wherein: a particle size composition of the magnesia in the refractory raw material blend is set such that a mass ratio of magnesia having a particle size of 1 mm or more to magnesia having a particle size of 0.075 mm to less than 1 mm is 0.2 to 1.5, and a mass ratio of the magnesia having a particle size of 1 mm or more to magnesia having a particle size of less than 0.075 mm is 3.0 or more; and a softening temperature of the pitch is 60°C to 350°C.

### [Advantageous Effects of Invention]

According to the production method of the present invention, it is possible to obtain a magnesia-carbon brick containing graphite at a low rare and having excellent spalling resistance and corrosion resistance, so that a usable life of converters and electric furnaces can be extended than before. In addition, it is possible to reduce heat loss due to dissipation of heat of molten metal, carbon pickup, and CO₂ emissions due to oxidation.

### DESCRIPTION OF EMBODIMENTS

One technical feature of the present invention is to specify the particle size composition of the magnesia in the refractory raw material blend, as mentioned above.

Specifically, in the present invention, the mass ratio of magnesia having a particle size of 1 mm or more (hereinafter referred to as "coarse magnesia") to magnesia having a particle size of 0.075 mm to less than 1 mm (hereinafter referred to as "medium magnesia") (the above mass ratio, i.e., "coarse magnesia/medium magnesia" will hereinafter be referred to as "mass ratio A") is set in the range of 0.2 to 1.5. If this mass ratio A is less than 0.2, the coarse magnesia having a particle diameter of 1 mm or more is excessively reduced, so thar the formation of pores around particles caused by expansion and shrinkage during operation of actual equipment becomes insufficient and thus a desired stress absorbing ability cannot be obtained, resulting in deteriorated spalling resistance. On the other hand, if the mass ratio A exceeds 1.5, dropout loss of the coarse magnesia as a damage form is accelerated, resulting in insufficient corrosion resistance.

Further, in the present invention, the mass ratio of the coarse magnesia to magnesia having a particle size of less than 0.075 mm (hereinafter referred to as "fine magnesia") (the above mass ratio, i.e., "coarse magnesia/fine magnesia" will hereinafter be referred to as "mass ratio B") is set to 3.0 or more. That is, if the fine magnesia is excessively increased, the frequency of contact between particles during molding increases to cause an increase in frictional resistance, which becomes a factor for deterioration in moldability, leading to difficulty in obtaining a dense molded body. Further, the fine magnesia has a large specific surface area and a high solubility in slag, which becomes a factor for insufficient corrosion resistance. Further, when particles receive a thermal load in the actual equipment, sintering among the particles progresses. In this process, the fine magnesia contributes to improvement in strength when the amount thereof is adequate, but if the amount is excessively large, the fine magnesia becomes a factor for deteriorated spalling resistance. For the above reasons, in the present invention, the mass ratio B is set to 3.0 or more. Under use conditions which prioritize spalling resistance, or the like, the content rate of the fine magnesia may be set to 0. In this case, the mass ratio B becomes infinite. That is, in the present invention, the upper limit of the mass ratio B is not limited. Further, although the upper limit of the particle size (i.e., 1 mm or more) of the coarse magnesia is not particularly limited, the upper limit of the particle size of the coarse magnesia is about 8 mm from common technical knowledge. That is, in the present invention, the particle size of the coarse magnesia is typically 1 mm to less than 8 mm.

As just described, in the present invention, the mass ratio A is set in the range of 0.2 to 1.5, and the mass ratio B is set to 3.0 or more. As a result of setting the mass ratio A and the mass ratio B to fall within these ranges, for example, when the medium magnesia increases, the fine magnesia decreases, and consequently it becomes possible to prevent deterioration in moldability due to an excessive increase of magnesia having a particle size of less than 1 mm (the medium magnesia and the fine magnesia).

As used in the present invention, the term "particle size" means a sieve mesh size when refractory raw material particles are screened and separated by a sieve. For example, magnesia having a particle size of less than 0.075 mm means magnesia which can pass through a sieve having a mesh size of 0.075 mm, and magnesia having a particle size of 0.075 mm or more means magnesia which cannot pass through the sieve having a mesh size of 0.075 mm.

Magnesia generally used as a raw material for refractory products may be used in the present invention without any problem, and examples thereof include electrofused magnesia or sintered magnesia.

Graphite produces an advantageous effect of improving spalling resistance, but needs not be used or may be used at 12% by mass or less, depending on operational conditions of a molten metal container to which graphite is to be applied. If the content rate of graphite exceeds 12% by mass, the graphite disappears through a reaction with iron oxide in slag, and the resulting formed pores are infiltrated by slag components, and dissolution of refractory aggregate is accelerated, thereby causing significant deterioration in corrosion resistance. It also causes heat loss due to heat dissipation, carbon pickup, and an increase in CO₂ emissions due to oxidation of the graphite. The amount of graphite used, i.e., the content rate of graphite in the refractory raw material blend is preferably set to 8% by mass or less (including 0). As the graphite, it is possible to use one or more of flake graphite, synthetic graphite, coke, expanded graphite, and the like.

Further, as a refractory raw material other than magnesia and graphite, it is possible to use one or more of: metal powders of aluminum, metal silicon, and the like; boron carbide; silicon carbide; spinel; powdered pitch; fibers; and carbon black, at a content rate of less than 5% by mass in total.

In the present invention, pitch/tar is used as a binder in order to reduce the amount of graphite used. Here, the term "pitch/tar" in the present invention is pitch, diluted pitch obtained by diluting pitch with a solvent, tar, or diluted tar obtained by diluting tar with a solvent. In other words, it is a generic term for pitch, diluted pitch obtained by diluting pitch with a solvent, tar, and diluted tar obtained by diluting tar with a solvent. The pitch/tar is carbonized through liquid phase, and thus has a property susceptible to graphitization (easily graphitizable property), as compared with a phenol resin. Thus, carbide to be generated has physical properties such as a high thermal conductivity, a low coefficient of thermal expansion, and a low elastic modulus, as compared with a phenol resin. This makes it possible for a refractory product using the pitch/tar as a binder to obtain very high spalling resistance, as compared with a case where a phenolic resin is used as the binder, even if graphite is contained in the refractory raw material blend at a low rate.

In the present invention, as the pitch, it is possible to suitably use pitch having a softening temperature of 60°C to 350°C, and more suitably use pitch having a softening temperature of 80°C to 250°C. If the softening temperature is excessively low, a brick after molding is likely to deform when the temperature of a storage aera rises during storage of the brick after molding. On the other hand, if the softening temperature is excessively high, a temperature drop of a mixture becomes large during molding, and the mixture becomes excessively hardened, leading to difficulty in obtaining a dense molded body, and an increase in cost for heating of a molding frame, etc. As for the tar, any tar which is generally used for refractory products may be usable without any problem. However, since tar has high viscosity at normal temperature, it is used under a condition that the viscosity is lowered by heating. In this case, a solvent may be added thereto to adjust a heating temperature lower.

Further, as for the diluted pitch or tar obtained by diluting pitch or tar with a solvent, included in the pitch/tar, examples of the solvent may include anthracene, xylene, toluene, methylnaphthalene, tetrahydrofuran (THF), 2-methyl-1-pyrroline, fluorene, and furfural. If the amount of such a solvent is excessively large, it is likely that the porosity of brick is increased, and corrosion resistance is deteriorated. Thus, it is preferable that the mixing ratio of the pitch or tar to the solvent is set to 1.5 or more in terms of mass ratio ("pitch or tar"/ "solvent"), and it is more preferable that no solvent is used. That is, as the pitch/tar, it is more preferable to use pitch or tar, instead of diluted pitch or tar obtained by diluting pitch or tar with a solvent.

In the present invention, the pitch/tar is added to the refractory raw material blend, and the resulting mixture is kneaded, wherein the kneading is performed under a warm condition so as to lower the viscosity of the pitch/tar to prevent an excessive increase in addition rate of the pitch/tar. As a guide, the addition rate is, for example, 1% by mass to 8% by mass with respect to 100% by mass of the refractory raw material blend, and the kneading is performed in a temperature range in which a dense microstructure is formed by pressure molding at an addition rate falling within the above level of range. Specifically, when the pitch/tar is pitch or diluted pitch, the kneading is performed at a temperature which is equal to or greater than a temperature lower than the softening temperature (°C) of the pitch by 20% of said softening temperature. If the temperature is excessively low, the viscosity of the pitch or diluted pitch becomes high, so that an excessive amount of pitch or diluted pitch is required to make the mixture suitable for molding, resulting in failing to obtain a dense brick and causing deterioration in corrosion resistance. It should be noted that there is no particular problem in performing the kneading at a temperature greater than the softening temperature of the pitch, but if the temperature during the kneading is set to be excessively higher than the softening temperature of the pitch, energy will be wasted. Thus, in the present invention, when the pitch/tar is pitch or diluted pitch, the kneading is performed at a temperature which is equal to or less than a temperature higher than the softening temperature (°C) of the pitch by 60% of said softening temperature. In other words, when the pitch/tar is pitch or diluted pitch, the term "warm condition" in the present invention means approximately the above-mentioned temperature range. On the other hand, when the pitch/tar is tar or diluted tar, the term "warm condition" means a temperature range of approximately 40 to 150°C. However, these temperature ranges are not strict, and therefore they are expressed with the term "approximately". The range of the term "approximately" should be interpreted based on common technical knowledge.

As with the kneading, the molding is also performed under a warm condition. Immediately after the kneading or when a mixture is kept warm, the molding can be performed without heating a metal frame, etc., of a molding machine. However, it is to be understood that the metal frame may be heated.

As just described, in the present invention, the kneading and molding are performed under the warm condition. Thus, the addition amount of the pitch/tar (i.e., pitch or tar), or a solvent can be reduced, which makes it possible to form a dense microstructure, thereby obtaining a refractory product having more excellent corrosion resistance.

A specific addition rate of the pitch/tar is appropriately adjusted to provide a mixture suitable for the kneading and molding. As a guide, the addition rate may be set, for example, in the range of 1% by mass to 8% by mass, with respect to 100% by mass of the refractory raw material blend, as mentioned above, and the addition rate is preferably set in the range of 1% by mass to 6% by mass, with respect to 100% by mass of the refractory raw material blend.

After the molding, heat treatment may be performed, e.g., at a temperature of 200°C to 800°C. However, since in a system using pitch, the pitch is solidified when a molded body is cooled to normal temperature after the molding, the resulting brick has sufficient strength for handling thereof. Thus, such brick may be used as a final product without being subjected to heat treatment after the molding.

### EXAMPLES

Table 1 shows the composition of each refractory raw material blend and the results of evaluations of each obtained brick, in Inventive Examples and Comparative Examples.

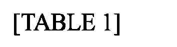

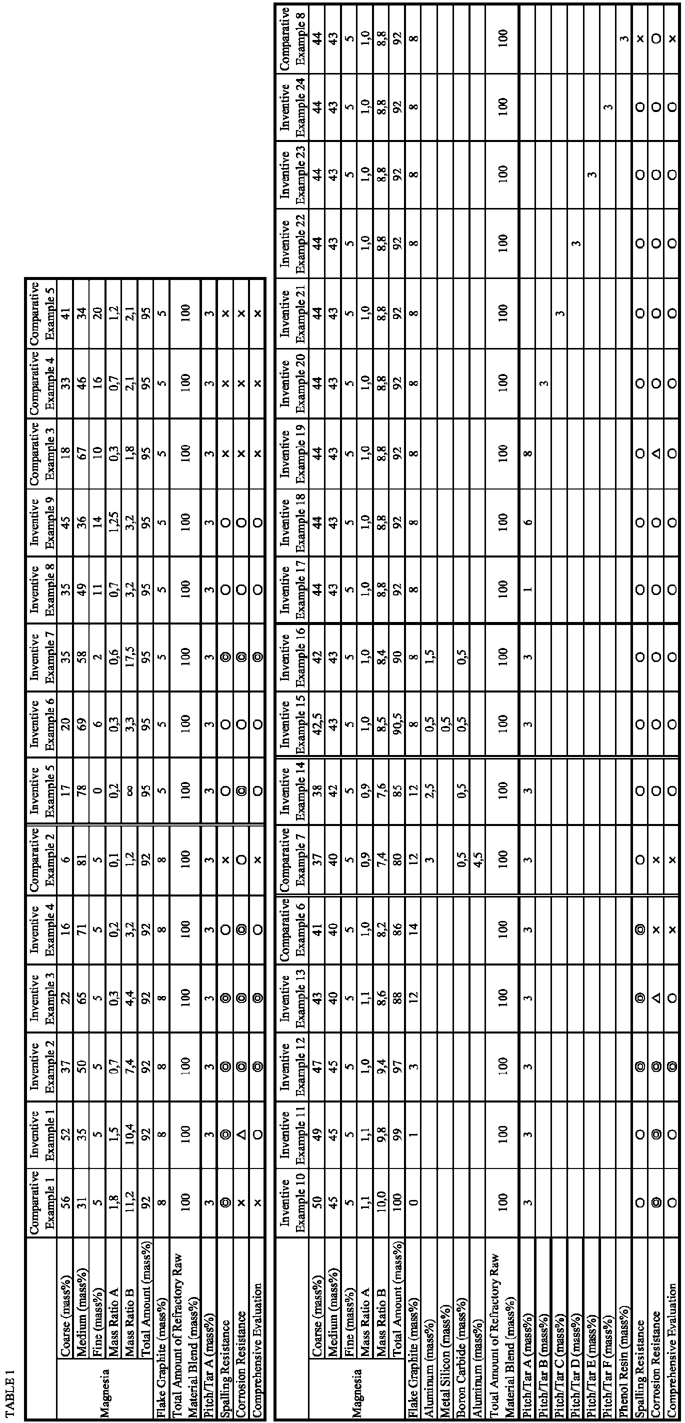

Magnesia and graphite used as refractory raw materials were, respectively, electrofused magnesia with an MgO purity of 98% by mass, and flake graphite with a fixed carbon content of 95% by mass, wherein the particle size of a coarse fraction of the magnesia was set in the range of 1 mm to less than 5 mm. As the pitch/tar used as a binder, pitch/tar A which is pitch with a softening temperature of 120°C and a fixed carbon content of 50% by mass, pitch/tar B which is pitch with a softening temperature of 270°C and a fixed carbon content of 54% by mass, pitch/tar C which is pitch with a softening temperature of 80°C and a fixed carbon content of 49% by mass, or pitch/tar D which is diluted pitch obtained by mixing the pitch of the pitch/tar B and a solvent (anthracene) at a mass ratio of (pitch/solvent) of 4, was used. Alternatively, pitch/tar E which uses coal tar as tar, or pitch/tar F which is diluted pitch obtained by mixing the tar of the pitch/tar E and a solvent (anthracene) at a mass ratio of (tar/solvent) of 4, was used.

Inventive Examples and Comparative Examples each using the pitch/tar A were prepared by kneading a mixture under heating allowing the mixture to have a temperature of 130°C, and immediately after the kneading, molding the kneaded mixture having a temperature of 130°C. Inventive Example using the pitch/tar B was prepared by kneading a mixture under heating allowing the mixture to have a temperature of 270°C, and immediately after the kneading, molding the kneaded mixture having a temperature of 270°C. Inventive Example using the pitch/tar C was prepared by kneading a mixture under heating allowing the mixture to have a temperature of 90°C, and immediately after the kneading, molding the kneaded mixture having a temperature of 90°C. Inventive Example using the pitch/tar D was prepared by kneading a mixture under heating allowing the mixture to have a temperature of 220°C, and immediately after the kneading, molding the kneaded mixture having a temperature of 220°C. Inventive Example using the pitch/tar E was prepared by kneading a mixture under heating allowing the mixture to have a temperature of 80°C, and immediately after the kneading, molding the kneaded mixture having a temperature of 80°C. Inventive Example using the pitch/tar F was prepared by kneading a mixture under heating allowing the mixture to have a temperature of 80°C, and immediately after the kneading, molding the kneaded mixture having a temperature of 80° C.

On the other hand, Comparative Example 8 using a phenol resin as a binder was prepared by performing kneading and molding at normal temperature. Here, the addition rate of the pitch/tar or phenol resin as a binder is as shown in Table 1, and is a rate with respect to and in addition to a total amount of 100% by mass of the refractory raw material blend.

In Inventive Examples and Comparative Examples shown in Table 1, a molding machine performed molding in an atmosphere at room temperature without heating the molding machine. In the molding, the kneaded mixture was pressure-molded into a shape of 230 mm × 114 mm × 100 mm. After the molding, the molded bodies of Inventive Examples other than Inventive Examples 20 and 22, and Comparative Examples, were heat-treated at 250°C for 5 hours, and the molded bodies of Inventive Examples 20 and 22 were heat-treated at 300°C for 5 hours. After sufficiently cooling the molded bodies to normal temperature, samples for physical property measurements were cut out from the resulting bricks to evaluate corrosion resistance and spalling resistance, and comprehensive evaluation was performed based on the results of evaluations thereof.

The corrosion resistance was evaluated by a rotation corrosion test using a sample fired in a reduction atmosphere at 1400°C for 5 hours. In the rotation corrosion test, an inner surface of a hollow cylinder having a horizontal rotation axis was lined with a brick under test (sample), and was heated by an oxygen-propane burner. Then, slag was put into the cylinder to corrode the surface of the brick. A test temperature and a test time were1700° C and 5 hours, respectively. The composition of the slag was set to satisfy CaO/SiO₂ = 3.4, FeO = 20% by mass, and MgO = 3% by mass, and discharge and input of the slag were repeated every 30 minutes. After completion of the test, the dimension (mm) of a maximally wear-damaged portion of each brick was measured as a residual dimension, and the residual dimension was expressed as a corrosion resistance index on the basis of 100 indicative of the residual dimension of "Inventive Example 1" described in Table 1. Then, a sample having a corrosion resistance index of 130 or more, i.e., in which wear damage is particularly small (the residual dimension is large), a sample having a corrosion resistance index of 110 to less than 130, i.e., in which wear damage is minor, a sample having a corrosion resistance index of 100 to less than 110, and a sample having a corrosion resistance index of less than 100, i.e., in which wear damage is large, were evaluated, respectively, as ⊚ (Excellent), ∘ (Good), Δ (Acceptable), and × (NG).

A spalling resistance test was performed by, using a sample of 40 × 40 × 190 mm fired in a reduction atmosphere at 1400°C for 5 hours, repeating a cycle of immersing the sample in hot metal heated up to 1600°C, for 90 seconds and then water-cooling the sample for 30 seconds, five times. After completion of the test, the sample was cut, and the resulting cut surface was observed to evaluate the degree of cracks. Specifically, a sample in which after completion of the test, no or significant minor crack was observed, a sample in which only a medium degree of cracks was observed and it was determined to have sufficient spalling resistance, and a sample in which the degree of cracks was large, or flaking/dropout of the sample occurred and it was determined to fail to withstand the 5-cycle repetitive test and to be unsuitable for use in actual equipment, were evaluated, respectively, as ⊚ (Excellent), o (Good), and × (NG).

The comprehensive evaluation was evaluated in the following three stages.
⊚ (Excellent): a case where both the spalling resistance and the corrosion resistance were evaluated as ⊚
∘ (Good): a case where both the spalling resistance and the corrosion resistance were evaluated as ∘ or Δ; or one of the spalling resistance and the corrosion resistance was evaluated as o and the other was evaluated as ⊚; or one of the spalling resistance and the corrosion resistance was evaluated as Δ and the other was evaluated as ∘ or ⊚
× (NG): a case where at least one of the spalling resistance and the corrosion resistance was evaluated as ×.

In Inventive Examples 1 to 4 which are different from each other in terms of the mass ratio A, but fall within the scope of the present invention, both the spalling resistance and the corrosion resistance have good results. In contrast, in Comparative Example 1 whose mass ratio A exceeds the upper limit of the present invention, the corrosion resistance is deteriorated. In Comparative Example 2 whose mass ratio A falls below the lower limit of the present invention, the spalling resistance is deteriorated.

In Inventive Examples 5 to 9 which are different from each other in terms of the mass ratio B, but fall within the scope of the present invention, both the spalling resistance and the corrosion resistance were evaluated as ⊚ or ∘, i.e., have good results. In contrast, in Comparative Examples 3 to 5 whose mass ratio B falls below the lower limit of the present invention, both the corrosion resistance and the spalling resistance are deteriorated.

In Inventive Examples 10 to 13 which are different from each other in terms of the content rate of graphite, but fall within the scope of the present invention, both the spalling resistance and the corrosion resistance have good results. In contrast, in Comparative Example 6 whose content rate of graphite exceeds the upper limit of the present invention, the corrosion resistance is deteriorated.

On the other hand, in Comparative Example 7 whose content rate of magnesia falls below the lower limit of the present invention, the corrosion resistance is deteriorated as compared with Inventive Example 14.

In Inventive Examples 15 and 16 each of which contains metal and boron carbide in the refractory raw material blend, but falls within the scope of the present invention, good results are obtained.

In Inventive Examples 17 to 19 which are different from each other in terms of the content rate of the pitch/tar A, but fall within the scope of the present invention, good results are obtained. In Inventive Example 20, Inventive Example 21, Inventive Example 22, Inventive Example 23, and Inventive Example 24 which use, respectively, the pitch/tar B, the pitch/tar C, the pitch/tar D, the pitch/tar E, and the pitch/tar F, but fall within the scope of the present invention, good results are obtained.

In contrast, in Comparative Example 8 which uses a phenol resin as a binder, the spalling resistance is deteriorated.

## Claims

1. A method of producing a magnesia-carbon brick, the method comprising:
adding, as a binder, pitch/tar which is pitch, diluted pitch obtained by diluting pitch with a solvent, tar, or diluted tar obtained by diluting tar with a solvent, to a refractory raw material blend containing magnesia at a rate of 85% by mass or more, and containing graphite at a rate of 12% by mass or less (including 0); and
subjecting the resulting mixture to kneading under a warm condition and then to molding under a warm condition,
wherein:
a particle size composition of the magnesia in the refractory raw material blend is set such that a mass ratio of magnesia having a particle size of 1 mm or more to magnesia having a particle size of 0.075 mm to less than 1 mm is 0.2 to 1.5, and a mass ratio of the magnesia having a particle size of 1 mm or more to magnesia having a particle size of less than 0.075 mm is 3.0 or more; and
an addition rate of the pitch/tar is 1% by mass to 8% by mass with respect to 100% by mass of the refractory raw material blend.

2. A method of producing a magnesia-carbon brick, the method comprising:
adding, as a binder, pitch/tar which is pitch, diluted pitch obtained by diluting pitch with a solvent, tar, or diluted tar obtained by diluting tar with a solvent, to a refractory raw material blend containing magnesia at a rate of 85% by mass or more, and containing graphite at a rate of 12% by mass or less (including 0); and
subjecting the resulting mixture to kneading under a warm condition and then to molding under a warm condition,
wherein:
a particle size composition of the magnesia in the refractory raw material blend is set such that a mass ratio of magnesia having a particle size of 1 mm or more to magnesia having a particle size of 0.075 mm to less than 1 mm is 0.2 to 1.5, and a mass ratio of the magnesia having a particle size of 1 mm or more to magnesia having a particle size of less than 0.075 mm is 3.0 or more; and
a softening temperature of the pitch is 60°C to 350°C.

3. The method as claimed in claim 1 or 2, wherein the content rate of the graphite is 8% by mass or less (including 0).
